Europäisches Patentamt

European Patent Office

Office européen des brevets

(11) Publication number: **0 213 861**
A2

# EUROPEAN PATENT APPLICATION

(21) Application number: 86306337.6

(22) Date of filing: 15.08.86

(51) Int. Cl.⁴: **H 04 N 1/46**
**H 04 N 5/84**

(30) Priority: 30.08.85 US 771541

(43) Date of publication of application:
11.03.87 Bulletin 87/11

(84) Designated Contracting States:
DE FR GB

(71) Applicant: TEKTRONIX, INC.
Tektronix Industrial Park D/S Y3-121 4900 S.W. Griffith
Drive P.O. Box 500
Beaverton Oregon 97077(US)

(72) Inventor: Eriksen, Joern B.
15715 South Evans Court
Oregon City Oregon 97045(US)

(72) Inventor: Wimmer, Guenther W.
8840 N.W. Cornell Road
Portland Oregon 97229(US)

(74) Representative: Burke, Steven David et al,
R.G.C. Jenkins & Co. 12-15, Fetter Lane
London EC4A 1PL(GB)

(54) Image transfer method and apparatus.

(57) Method and apparatus are provided for generating hard-
copy images from multi-component pixel data. Lines of a
photosensitive medium pass by a plurality of phosphor strips
of a cathode-ray tube. As each line of the photosensitive
medium passes each phosphor strip, a separate component
of image information is transferred until a complete line of the
source image is "built up" on the photosensitive medium.
Programmable means are provided for managing the compo-
nent-wise transfer of image data to ensure faithful reproduc-
tion of the source image on the photosensitive medium.

FIG. 1

EP 0 213 861 A2

# IMAGE TRANSFER METHOD AND APPARATUS

## Background of the Invention

This invention relates to an image transfer method and apparatus, and particularly to a method and apparatus for transferring and producing, under programmed control, hardcopy color images from digitally encoded pixel data.

Use of fiber optic cathode-ray tubes (FOT's) for copying black and white images on photosensitive media has been available for several years, e.g., Stein, U.S. Patent 4,201,996, issued 6 May 1980, "Cathode-Ray Tube Having Image Transfer Means;" Eriksen, U.S. Patent 4,251,835, issued 17 February 1981, "Image-forming System For Obscuring Raster Lines;" and Eriksen, U.S. Patent 4,499,501, issued 12 February 1985, "Image Transfer Method and Apparatus," all assigned to the assignee of the present invention.

Color capabilities would greatly enlarge the applicability and versatility of fiber optic copiers: for example, direct copying of colored images becomes possible; and false color representations could be produced for showing three dimensional features, or for displaying information contained in digital representations of infrared, radio, or UV images.

Denham, in U.S. Patent 4,309,720, issued 5 June 1982, "Apparatus and Method For Producing an Image on a Sensitive Surface," assigned to the assignee of the present invention, discloses means for transferring a refreshed color raster-scan image to a photosensitive medium by an FOT. The system successively gates the source signal of the raster-scanned display to transfer separate color components of short successive segments of each raster line to a photosensitive medium.    An FOT having a different phosphor strip for each primary color is used to activate the photosensitive medium.    The length of the short successive segments transferred during each refresh cycle of the raster-scan  image are on the order of the width of the phosphor strips.    Thus, a complete image transfer takes many refresh cycles, depending on the length of the raster lines and the widths of the phosphor strips.

Wurtz,    in  "Color Display and Recording with CRT's," _Electro-Optical Systems Design_, April 1981, pgs. 35-44, proposed the production of color images by passing a photosensitive medium across the face of a FOT having three phosphor strips. He further proposes the use of a memory to store color information until appropriate lines of photosensitive medium pass by the appropriate phosphor strips, so that each line of the source image is "built up" color-by-color on the photosensitive medium as it successively passes phosphor strips.

An alternative to the current fiber optic CRT image transfer techniques which provides for more rapid image transfer would be highly desirable, particularly in regard to color image copying.

## Summary of the Invention

The present invention is directed to an apparatus and method for rapidly transferring a source image which has been digitally encoded into a multi-component pixel array, e.g., such that each component represents a primary color intensity. In accordance with the preferred embodiment of the present invention, the source image is transferred line by line at a rate comparable to the rate at which the source image is scanned and digitally encoded into multi-component pixel data. A light generating means is provided for photometrically sensitizing lines on a photosensitive medium so that multi-component pixel data is transferred component by component to each line. Preferably, the light generating means is a CRT whose faceplate has a plurality of substantially parallel phosphor strips, at least one phosphor strip for each component of the multi-component pixel data. Each phosphor strip is capable of generating light having a wavelength different from that generated by the other phosphor strips, so that a photosensitive medium can be selected which responds differently to the radiated energy from each phosphor, thereby allowing the multi-component data to be represented thereon. For each component of the multi-component pixel data, an associated plurality of component-specific lines are stored in a memory. A component-specific line is a series of data values, or bits, which represent the values of the same component of a series of pixels comprising one line of the image to be transferred. The number of data values within each line is a matter of design choice, depending on the particular application, speed of copying, resolution, and the like.

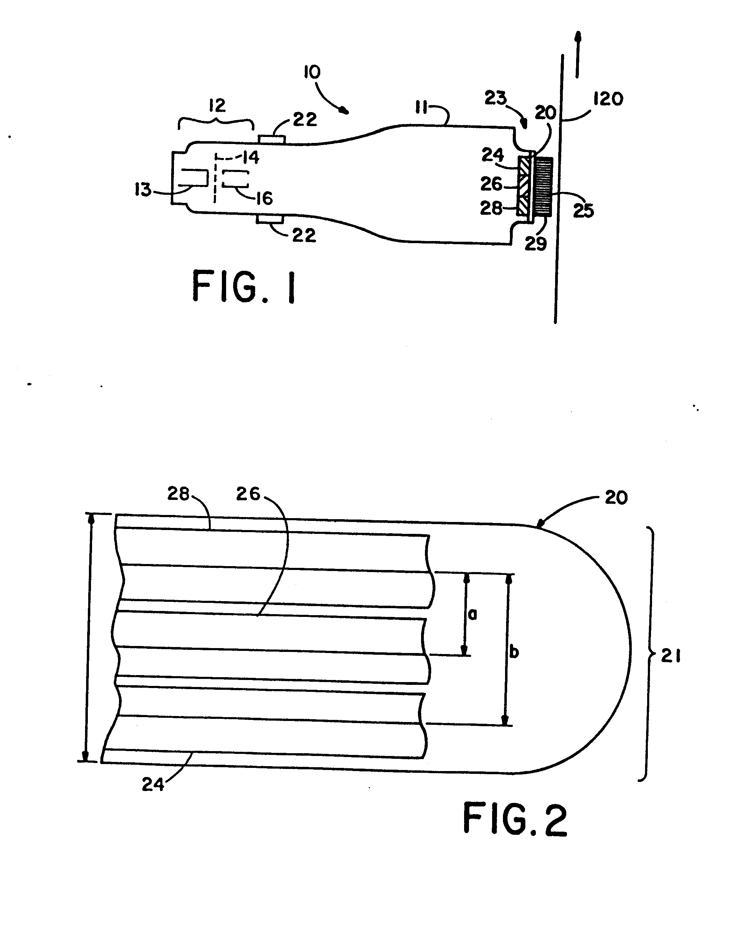

The associated plurality of component-specific lines which must be stored for each component depends on the spacing between the first phosphor strip on the CRT faceplate and successive phosphor strips (for example, such distances for a three component system are indicated by "a" and "b" on Figure 2). In accordance with the preferred embodiment, each phosphor strip transfers a separate component of the pixel data (in a line-by-line fashion) to the photosensitive medium. Thus, as a line on the photosensitive medium passes across each phosphor strip, an additional component of pixel data is transferred, so that as the last phosphor strip is passed, a complete color representation of a line of the source image is transferred. Since the source image can be encoded into multi-component pixel data faster than the photosensitive medium can be passed before the complete set of phosphor strips on the CRT, the pixel data corresponding to each of the phosphor strips successive to the first phosphor strip must be stored long enough for the line on the photosensitive medium to which it corresponds to reach the appropriate phosphor strip of the CRT for recording a successive component. The number of component-specific lines in each associated plurality depends on the distance between the first phosphor strip (that, is, the one which transfers the first component of pixel data to the photosensitive medium) and the phosphor strip to which it corresponds. It also depends on the resolution required in a particular application.

Storage and readout of the data values of the component-specific lines from memory are under programmed control so that actuation of the sweeps of the electron beam along the phosphor strips in sequence is synchronized with the advancing photosensitive medium. A microprocessor implemented program chooses the appropriate component-specific line, i.e., the preselected line as described below, from the associated plurality of such lines, the data values of which control the modulation of the electron beam as it sweeps along the phosphor strip associated with that component. The electron beam successively sweeps along each of the phosphor strips. Each sweep transfers a different component of pixel data to separate lines on the photosensitive medium. The program manages the stored pixel data so that appropriate components will be transferred at the appropriate times permitting each line of the source image to be "built up" on the photosensitive medium in a component-wise manner, until a complete representation of the source image is formed.

In accordance with the invention, the wavelength of light emitted by a particular phosphor need not correspond to the color imparted to the photosensitive medium.

The present invention is addressed to the problem of improving the speed of transfer of multi-color source images in a single pass. The invention overcomes disadvantages of current transfer techniques by utilizing a CRT having a plurality of phosphor strips, one each for the colors to be transferred, and providing programmable means for managing the multi-component pixel data of the source image and for controlling line-by-line component-wise transfer to a photosensitive medium.

### Description of the Drawings

Fig 1 is a simplified, partially sectioned side view of a cathode-ray tube for use with the preferred embodiment of the invention.

Fig. 2 is a frontal view of the face of a cathode-ray tube suitable for use with the preferred embodiment.

Fig. 3 is a diagrammatic overview of one implementation of the preferred embodiment of the invention.

Fig 4 is a diagrammatic representation of another implementation of the preferred embodiment of the invention.

Fig. 5 is a configurational view of the spatial normalization representing a program buffer of Fig. 4.

Fig. 6 is a state diagram for a program suitable for use with the embodiment of Fig. 4.

Fig. 7 is a state diagram for a program suitable for use with the spatial normalization buffer of Fig. 5.

In accordance with the present invention, an apparatus and method are provided for rapidly transferring, in a line-by-line manner, representations of images encoded as multi-component pixel data to a photosensitive medium. In the preferred embodiment, the components of the pixel data correspond to the primary colors from which full color images can be formed, e.g., red, green, and blue. In accordance with the invention, the components can also correspond to other color combinations, having either a greater or a lesser number of colors.

One feature of the invention is the temporary storage of component-specific lines of pixel data as the photosensitive medium moves across successive phosphor strips. As the photosensitive medium passes a phosphor strip, the appropriate component-specific line of pixel data is used to modulate the CRT electron beam current as the electron beam sweeps along the phosphor strip, thereby radiantly transferring the source image information encoded in the component-specific line to a line of photosensitive medium. Thus, as each line of photosensitive medium passes a phosphor strip, the appropriate component-specific line of multi-component pixel data is selected from memory and radiantly transferred thereto.

Most generally, the invention provides a means for creating an image, line by line, on a positive photosensitive media from stored multi-component pixel data. In particular, the preferred embodiment of the invention is adapted for use with apparatus which acquires source image information (in the form of multi-component pixel data) simultaneously with the component-wise transfer of such information to a photosensitive medium. That is, the preferred embodiment described in detail is one which might be adapted for use as an ordinary photocopying, or direct image copying, device. However, the programmed transfer concept is more general than this particular application.

Referring first to Figs. 1 and 2, there is shown a cathode-ray tube 10 employed in the preferred embodiment of the present invention. As disclosed, the tube includes an evacuated envelope 11 enclosing a single writing gun 12 comprising a cathode 13, a control grid 14, and a focusing/accelerating anode structure 16 for forming a narrow writing beam of high velocity electrons which may be caused to strike a target structure 23 comprising three elongate bands or strips 24, 26, and 28 of different phosphorescent materials, or phosphors, deposited on the inner surface of a faceplate 20. As shown most clearly in Fig. 2, the three phosphor bands 24-28 are arrayed in mutually parallel orientation so as to form an elongate display area or screen 21, the longest dimension of which is parallel to the longitudinal axes of the three bands. Preferably, each strip is formed of a conventional phosphorescent material, or phosphor, selected to produce, upon excitation, radiant energy having a wavelength different from that produced by the other selected materials. Also, preferably, the display area 21 is overlain with a plurality of fiber optic materials 29 to present at surface 25 a focused reproduction of an image produced within display area 21. Also shown in Fig. 1 is a deflection yoke 22 or other suitable means for deflecting the beam within each strip 24-28, and a sensitized sheet medium 120, the function of which is explained in detail below.

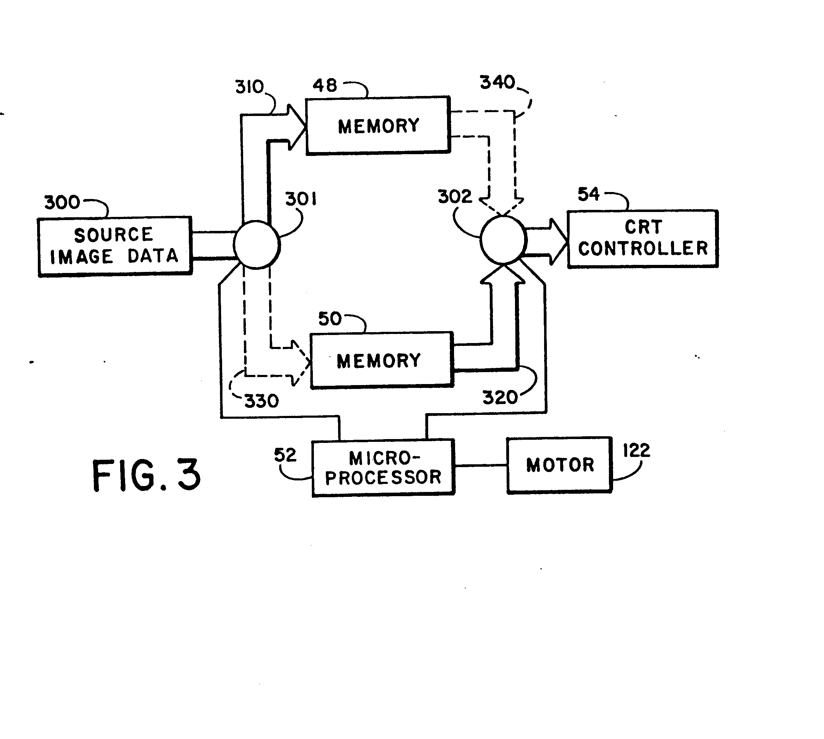

Fig. 3 provides an overview of one implementation of the preferred embodiment. Microprocessor 52 toggles the flow of source image data 300 between first memory 48 and second memory 50 over data buses 310 and 330, respectively, by switching circuit 301. In these memories, the source image data is stored in files of component-specific lines, i.e., each file contains an associated plurality of such lines. At the same time, microprocessor 52 alternatively toggles between the sources of output data, namely first memory 48 and second memory 50 by means of switching circuit 302. The output data is applied to CRT controller 54 over data buses 320 and 340 via switch 302 so that first memory 48 is being written into when second memory 50 is being read from, and vice versa. These alternative data buses are indicated by solid and dashed lines in Fig. 3.

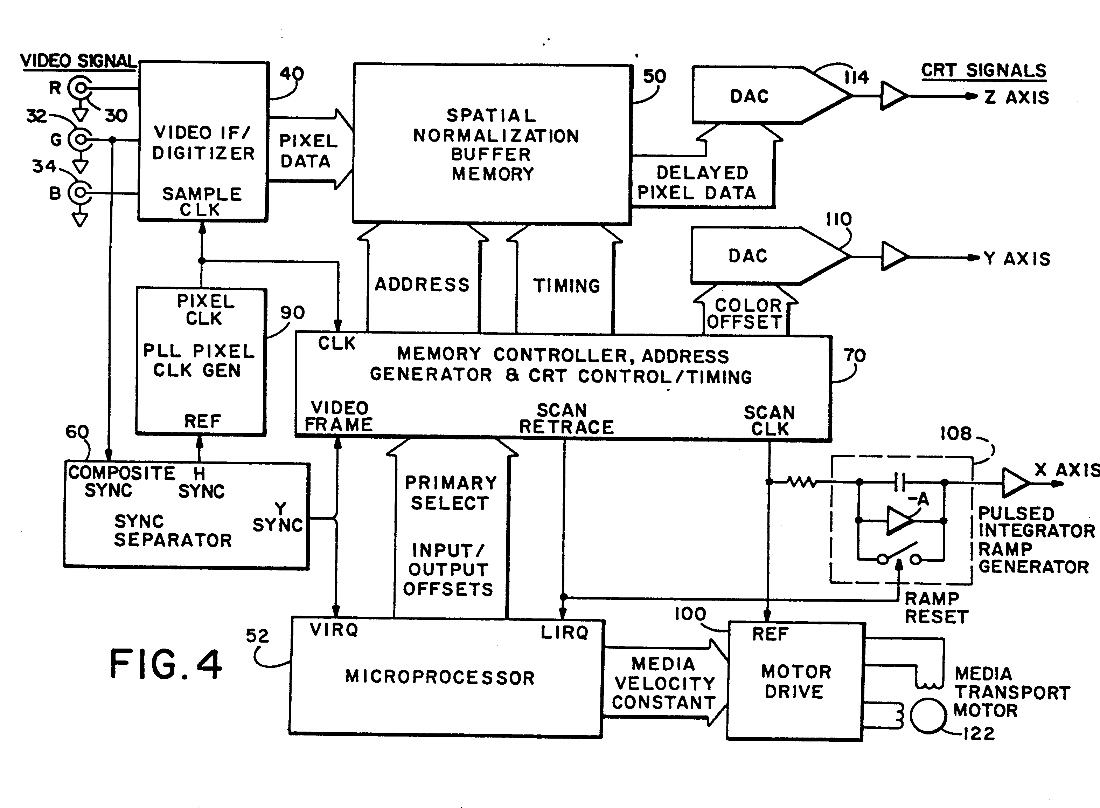

In Fig. 4 another implementation is shown for use with a direct image copying device to print one image line per video line of a host display (not shown). Analog signals (not shown) proportional to the intensity of a red component 30, green component 32 and blue component 34 of a single line of a source image are directed to a video IF/digitizer 40 where the components are digitized and output as pixel data to a spatial normalization buffer memory 50. The memory 50 is used to serve as an input buffer and to delay the pixel data for the purpose of normalizing the physical displacement between phosphor strips 24, 26, 28.

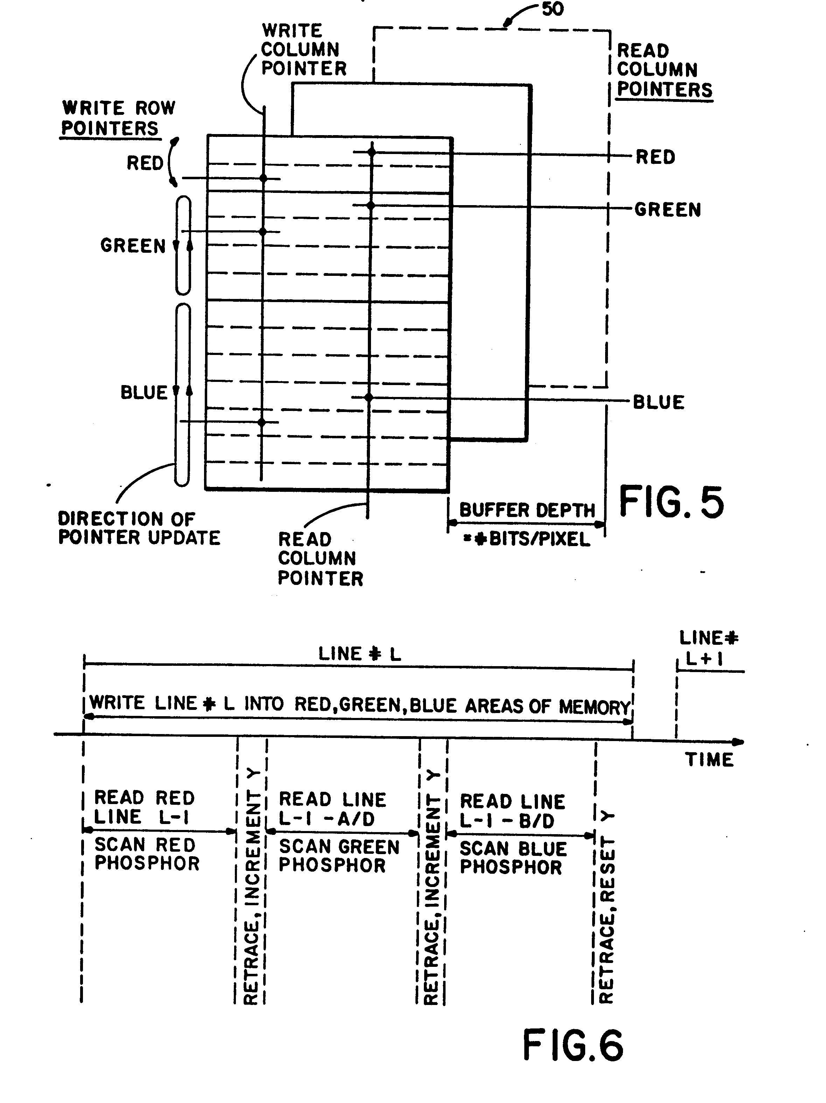

A phase locked loop (PLL) pixel clock generator receives the host display's pixel clock to sample the video data and provide timing for a media marking mechanism. One of the video input signals is input to a sync separator 60 which extracts the horizontal and vertical sync pulses from the host display. The horizontal sync pulses are used by the PLL pixel clock generator 90 to generate a sample clock pulse which clocks the digitizer 40 and a controller/timing circuit 70. The vertical sync pulses are input to the controller/timing circuit 70 and as an interrupt request (V IRQ) to a microprocessor 52. If sufficient memory bandwidth is not available to accept the video pixels in primary sequential form and still allow interlaced accesses by the controller 70, then the buffer memory 50 may be expanded to provide independent input and output buffers as shown in Fig. 3. The digitized sequential pixels are stored in primary component sequential form by requesting a write access to the spatial normalization buffer memory 50. The controller 70 generates three writes, one for each primary video input signal (RGB), and deposits the pixel information in parallel in the bufffer memory 50. Referring to Fig. 5, each write uses an address generated by adding a WRITE COLUMN POINTER to each of a plurality of WRITE ROW POINTERS (3). The WRITE ROW POINTERS are set equal to the current READ ROW POINTERS at the end of each scan line. Interlaced with writing input pixel information is reading output pixel information in primary component per exposure scan line form, which pixel information was previously deposited in the buffer. The WRITE POINTER = READ POINTER - 1. The buffer 50 is interrogated at the FOT 10 pixel writing rate with one scan required per primary component. Fig. 5 depicts a buffer 50 configured for a spatial normalization of three raster lines between phosphor strips. Exposure of the GREEN and BLUE components of a given input pixel is delayed by nine and eighteen scan lines respectively from exposure of the RED component of that pixel. Pixel data is input to the buffer 50 in parallel form using an independent column pointer. The row pointers are incremented every three FOT scans.

Exposure of the media 120 requires that the FOT 10 be scanned at three times the incoming video rate. Each scan uses a Y-axis offset of the FOT 10 so that the electron beam impinges upon the phosphor component 24, 26, 28 of interest. Address generation for reading of the pixel component information is derived by adding a READ COLUMN POINTER to each of a plurality of READ ROW POINTERS (3). The READ ROW POINTERS are updated to equal the current READ ROW POINTERS plus the modulus of the READ COLUMN POINTER at the end of every three FOT scans.

A SCAN CLK from the controller/timing circuit 70 is made available to a media transport motor drive 100 where it is scaled to yield a media velocity commensurate with the imaging rate, i.e., moving the media 120 by the FOT 10 so that the imaging lines are uniformly exposed on the media.

During operation, microprocessor 52 generates signals representing the starting addresses for the buffer memory. Microprocessor 52 also actuates CRT controller 54 each time the three lines of component-specific data are to modulate the CRT electron beam intensity as it sweeps across successive phosphor strips. CRT controller 54 generates signals for controlling the CRT electron beam. X-ramp generator 108 sweeps the CRT electron beam across the longitudinal dimension (the X-direction) of the phosphor strips. The CRT electron beam is directed to the appropriate phosphor strip (i.e., the y-offset is determined) by a signal from digital-to-analog converter (Y-DAC) 110 amplified by amplifier 112. The intensity of the CRT electron beam is controlled by signals from digital-to-analog converter (Z-DAC) 114 which are amplified by amplifier 116.

Microprocessor 52 controls the advance of photosensitive medium across the faceplate 20 of the CRT Motor 122 advances the photosensitive medium at a predetermined rate which is synchronized with the data transfer rate so as to produce a coherent representation of the source image.

As shown in Fig. 6 while one line of the image is read into the buffer 50 in the form of parallel primary components, a prior line is read out, one primary component at a time, and used to modulate the electron beam as it scans the corresponding phosphor on the FOT 10. The size of the buffer memory 50 is a function of the spacing d between lines on the resulting image and the spacing between the red electron beam scan line position and the green and blue electron beam scan line positions, a and b respectively: $Mgreen = a/d$, $Mblue = b/d$ where a and b are variable to obtain the selected integer values for Mgreen and Mblue. The electron beam retraces after each primary component read out, and the media 120 moves at a rate such that the respective primary components for each line are superimposed to reproduce the source image on the media.

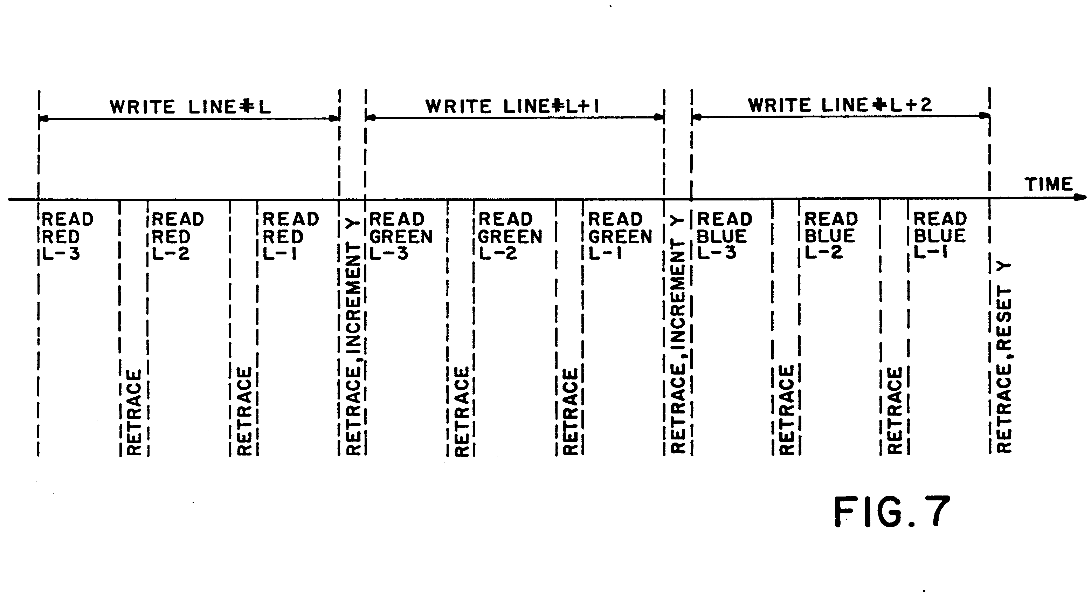

A further improvement in picture quality may be achieved by reading two or more successive lines of each primary component as shown in the discussion of Fig. 5. This requires additional memory and more lines to read out in the allocated time slot as depicted in Fig. 7.

The description of the foregoing embodiment of the invention has been presented for purposes of illustration and description. It is not intended to be exhaustive or to limit the invention to the precise form disclosed, and obviously many modifications and variations are possible in light of the above teaching. The embodiment was chosen and described in order to best explain the principles of the invention and its practical application to thereby enable other skilled in the art to best utilize the invention in various contexts and with various modifications as are suited to the particular use contemplated. It is intended that the scope of the invention be defined by the claims appended hereto.

CLAIMS:

1. A method for transferring an image encoded as lines of multi-component pixel data to a photosensitive medium by means of a cathode-ray tube having an electron beam and a faceplate, the faceplate further having at least one phosphor strip for each component of the multi-component pixel data, the phosphor strips being disposed in a substantially parallel orientation with respect to one another, and each phosphor strip being capable of radiating at a wavelength different from that radiated by at least one other phosphor strip in response to the electron beam, the method comprising the steps of:

(a) storing an associated plurality of component-specific lines for each component of the multi-component pixel data, each such line comprising a sequence of data values;

(b) successively modulating the current of the electron beam as the electron beam successively sweeps along each phosphor strip for each component of the multi-component pixel data, each modulation being in accordance with the sequence of data values of a preselected line from each of the associated pluralities of component-specific lines;

(c) moving a photosensitive medium at a predetermined rate across the faceplate of the cathode-ray tube in a direction substantially perpendicular to the phosphor strips such that the photosensitive medium responds to radiation emanating from the phosphor strips; and

(d) repeating steps (b) and (c) until a complete image is formed on the photosensitive medium.

2. The method of claim 1 wherein said step (b) further includes:

(e) choosing said preselected lines so that said sequence of data values contained therein are components of the same line of multi-component pixel data whenever component-specific line data thereof has already been transferred to said photosensitive medium adjacent to said phosphor strip along which said electron beam sweeps while being modulated in accordance with said preselected line data.

3. The method of claim 2 wherein said step (a) further includes the steps of:

(f) ordering said components of said multi-component pixel data to correspond to successive phosphor strips on said faceplate of said cathode-ray tube;

(g) storing a single component-specific line of a first component; and

(h) storing associated pluralities of component specific lines of successive components, the number of component-specific lines in each such associated plurality depending on the distance between a first phosphor strip and the successive phosphor strip to which the associated plurality corresponds.

4. The method of claim 3 wherein each component of said multi-component pixel data represents a different member of a set of primary colors.

5. An apparatus for transferring an image encoded as multi-component pixel data to a photosensitive medium by means of a cathode-ray tube having an electron beam and a faceplate, the faceplate further having a plurality of radiation emitting means for exposing linear strips of the photosensitive medium to representative components of the multi-component pixel data to produce same thereon, and each radiation emitting means of the plurality for transferring a different component of the multi-component pixel data to the photosensitive medium, the apparatus comprising:

memory means for storing an associated plurality of component-specific lines for each component of the multi-component pixel data, each such line comprising a sequence of data values;

means coupled to the memory means for controlling the plurality of radiation emitting means to expose successively each line on photosensitive medium to the appropriate components of the multi-component pixel data by each radiation emitting means; and

means coupled to the control means for moving the photosensitive medium successively past each of the radiation emitting means.

6. The apparatus of claim 5 wherein said controlling means includes means for modulating said electron beam as it sweeps across each of said plurality of phosphor strips, each modulation being in accordance with the sequence of said data values of a preselected line from each of said associated pluralities of component-specific lines.

7. Apparatus for copying a color source image onto a photosensitive medium after encoding the color source image into multi-component pixel data, each component of the multi-component pixel data being related to a different member of a set of primary colors, and after separating the multi-component pixel data into component-specific lines, each such line comprising a sequence of data values, wherein copying is carried out by means of a cathode-ray tube having an electron beam and a faceplate, the faceplate further having a plurality of phosphor strips, the phosphor strips being disposed in a substantially parallel orientation with respect to one another, and each phosphor strip being capable of generating, in response to the electron beam, a different primary color of said set on the photosensitive medium, and wherein the cathode-ray tube is responsive to a control means that modulates the electron beam as it sweeps across a phosphor strip in response to the data values of a component-specific line, the apparatus comprising:

memory means for storing an associated plurality of component-specific lines for each component of the multi-component pixel data;

means coupled to the memory means for selecting component-specific lines from the associated pluralities of same and transferring the data values of the selected component-specific lines to the control means such that each linear strip of photosensitive media is successively exposed by each phosphor strip to the appropriate components of the same line of multi-component pixel data; and

means coupled to selection means for controlling the movement of the photosensitive medium past the faceplate of the cathode-ray tube.

_1_

FIG. 1

FIG.2

FIG.3

FIG. 4

0213861

4

50

WRITE COLUMN POINTER

READ COLUMN POINTERS

WRITE ROW POINTERS

RED

GREEN

BLUE

RED

GREEN

BLUE

DIRECTION OF POINTER UPDATE

READ COLUMN POINTER

BUFFER DEPTH = # BITS/PIXEL

## FIG. 5

LINE # L

LINE # L+1

WRITE LINE # L INTO RED, GREEN, BLUE AREAS OF MEMORY

TIME

READ RED LINE L-1

SCAN RED PHOSPHOR

RETRACE, INCREMENT Y

READ LINE L-1 - A/D

SCAN GREEN PHOSPHOR

RETRACE, INCREMENT Y

READ LINE L-1 - B/D

SCAN BLUE PHOSPHOR

RETRACE, RESET Y

## FIG. 6

FIG. 7

| WRITE LINE≠L | | | | WRITE LINE≠L+1 | | | | WRITE LINE≠L+2 | | |
|---|---|---|---|---|---|---|---|---|---|---|

READ RED L-3 · RETRACE · READ RED L-2 · RETRACE · READ RED L-1 · RETRACE, INCREMENT Y · READ GREEN L-3 · RETRACE · READ GREEN L-2 · RETRACE · READ GREEN L-1 · RETRACE, INCREMENT Y · READ BLUE L-3 · RETRACE · READ BLUE L-2 · RETRACE · READ BLUE L-1 · RETRACE, RESET Y

TIME

0213861